# EUROPÄISCHE PATENTSCHRIFT

(11) **EP 3 449 215 B1**
(45) Veröffentlichungstag und Bekanntmachung des Hinweises auf die Patenterteilung: **19.03.2025**
(21) Anmeldenummer: 17717321.8
(22) Anmeldetag: 04.04.2017
(51) Int. Cl.: G01D 4/00

(54) **VERFAHREN UND EINRICHTUNG ZU BIDIREKTIONALER KOMMUNIKATION ZWISCHEN MESSGERÄTEN UND DATENSAMMLER**
METHOD AND APPARATUS FOR BIDIRECTIONAL COMMUNICATION BETWEEN METERING APPARATUS AND DATA COLLECTION APPARATUS
PROCÉDÉ ET DISPOSITIF DE COMMUNICATION BIDIRECTIONNELLE ENTRE DES APPAREILS DE MESURE ET DES COLLECTEURS DE DONNÉES

(30) Priorität: 26.04.2016 DE 102016005053; 27.07.2016 DE 102016009197
(43) Veröffentlichungstag der Anmeldung: 06.03.2019
(73) Patentinhaber: Diehl Metering Systems GmbH, 90451 Nürnberg (DE)
(72) Erfinder: PETKOV, Hristo, 90425 Nürnberg (DE); LAUTENBACHER, Thomas, 91058 Erlangen (DE); KAUPPERT, Thomas, 90455 Nürnberg (DE); GOTTSCHALK, Klaus, 90610 Winkelhaid (DE); MZYK, Raphael, 91126 Kammerstein (DE)
(74) Vertreter: Diehl Patentabteilung
(86) Internationale Anmeldenummer: PCT/EP2017/000414
(87) Internationale Veröffentlichungsnummer: WO 2017/186335

(56) Entgegenhaltungen:
- EP-A2- 1 653 245
- GB-A- 691 865
- GB-A- 691 865
- US-A- 4 490 722
- US-A- 4 490 722
- US-A- 5 438 329
- US-A1- 2004 116 981
- US-A1- 2010 060 479
- US-A1- 2013 215 806
- US-B1- 6 771 720

## Beschreibung

Das technische Gebiet der Erfindung ist die Kommunikation zwischen Messgeräten und Datensammler.

Ein Verfahren zur bidirektionaler Kommunikation gemäß dem Oberbegriff des Anspruchs 1 ist aus der US 2010/0060479 bekannt. Diese Veröffentlichung beschreibt ein Anzeigegerät, welches mit einem Smartmeter über eine bidirektionale Funk-Kommunikationsstrecke kommunizieren kann.

Aus der US 2013/0215806 A1 ist ein bidirektionales Funkkommunikationssystem des Bereichs der Mobilfunkkommunikation für einen bidirektionalen Datenaustausch von Videodaten oder Computergrafiken bekannt. Das Verfahren umfasst zwei Geräte, von denen eines gemäß einer Variante mit einem Frequenz-Offset-Detektionsblock versehen ist. Diese Variante wird jedoch durch den hierdurch erforderlichen schaltungstechnischen Aufwand in den beiden Geräten als nachteilig dargestellt.

Die US 2004/0116981 A1 betrifft eine bidirektionale Kommunikation zwischen einem implantierbaren medizinischen Gerät und einer externen Einheit, wobei das implantierbare medizinische Gerät eine Sende- sowie Empfangsfrequenz aufweist, welche einen festgelegten Unterschied zueinander haben sollen. Für eine Kommunikation wird durch die externe Einheit ein "All-call"-Signal über eine Mehrzahl von Frequenzkanälen mit einer im Vergleich zu der jeweiligen Bandbreite des Frequenzkanals schmäleren Bandbreite als der normalen Bandbreite ausgesendet. Für eine normale Kommunikation zwischen der externen Einheit sowie dem implantierbaren Gerät wird jedoch die volle Bandbreite der bidirektionalen Kommunikation genutzt.

Im Rahmen vorliegender Erfindungsbeschreibung wird unter einem Messgerät ganz allgemein ein solches verstanden, das nicht nur per Kurzstreckenfunk digitalisierte Messwerte als individualisierte Datentelegramme an einen Datensammler übermitteln, sondern auch von jenem per Funk Steuertelegramme empfangen kann. Auf die Publikationen DE 10 2004 061 742 B4 und DE 10 2010 005 587 A1 wird Bezug genommen. Jedes der Messgeräte erfasst mit seinen Sensoren in vorgegebenen zeitlichen Abständen etwa den Verbrauch von Kalt- und Warmwasser, von Haushaltsgas oder von Wärmemengen an Heizkörpern und insbesondere von elektrischer Leistung, gegebenenfalls mit anschließender Analog-Digital-Umsetzung von Sensorwerten. Unter Hinzufügen eines Zeitstempels und einer Messgeräteidentifikation wird eine Folge geräteindividueller Datentelegramme erstellt. Die werden vom jeweiligen Messgerät an den Empfänger des mehreren Messgeräten gemeinsam zugeordneten, abgesetzt installierten Datensammlers übertragen, der auch als Konzentrator bezeichnet wird. Im Datensammler werden die Datentelegramme von möglichst vielen Messgeräten zwischengespeichert und gegebenenfalls vorverarbeitet, bevor sie über Funk ausgelesen und in dem Zuge direkt oder mittels eines mobilen Speichers an eine Zentrale zur Auswertung übermittelt werden, etwa zum Erstellen und Versenden von Jahres-Verbrauchsabrechnungen.

Die Messgeräte und der Datensammler sind für bidirektionalen Funkverkehr untereinander über lizenzfrei verfügbare Nahbereichs-Frequenzbänder ausgestattet. Deshalb können auch vom Sender des Datensammlers an individuelle Messgeräte, insbesondere an solche zum Erfassen elektrischen Leistungsverbrauches, Steuertelegramme übermittelt werden. Die dienen vor allem einerseits einer Verbrauchskostenoptimierung und andererseits einer Netzstabilisierung; indem etwa während momentan niedrigen Lastabrufes aus dem Versorgungsnetz elektromotorische oder elektrothermische Haushalts-Großgeräte über den als Smart Meter ausgelegten Datensammler vorübergehend eingeschaltet werden, zumal unter vergünstigten Tarifbedingungen während gewisser Nachtstunden. Die schaltungstechnische Auslegung des Empfängers und des Senders beim Datensammler, sowie deren Ausstattung mit vergleichsweise großen, abgestimmten Antennen, ist unkritisch, da regelmäßig im Gehäuse des Datensammlers genügend Raum und auch elektrische Betriebsenergie aus Batterien oder gar einem Netzanschluss verfügbar sind.

Aber das Messgerät an der Verbrauchseinrichtung soll möglichst unauffällig, also kleinbauend sein. Da ein Netzanschluss für dessen Betrieb regelmäßig nicht verfügbar ist, muss jedes Messgerät autark mittels Batterien arbeiten, von denen eine Betriebszeitspanne über typisch zehn Jahre erwartet wird. Deshalb muss die Messgerät-Kommunikation hier mangels Ressourcen mit funktechnisch vergleichsweise geringem geräte- und schaltungstechnischem Sende- und Empfangsaufwand betrieben werden. Das erschwert insbesondere die störungsfreie schmalbandige Downlink-Übermittlung dekodierbarer Steuertelegramme vom Datensammler an individuelle Messgeräte.

In Erkenntnis derartiger Gegebenheiten liegt vorliegender Erfindung die technische Problemstellung zugrunde, auch unter solchen abträglichen Randbedingungen insbesondere noch problemlos demodulierbaren Empfang der Steuertelegramme vom Datensammler in den Messgeräten zu erzielen.

Die GB691865 A offenbart ein unidirektional arbeitendes Funkrelais.

Die US 4 490 722 A offenbart die Anwendung eines Überlagerungsempfängers zur Entfernungsüberwachung zwischen einer stationären Sendestation und einer mobilen Empfangsstation. Eine Entfernungsänderung wird als Phasenverschiebung zwischen einer vom Sender empfangenen, unmodulierten Trägerfrequenz und einer davon abweichend im Empfänger generierten Überlagerungsfrequenz erfasst. Zum Kompensieren von Drifteinflüssen wird von Zeit zu Zeit seitens der mobilen Station ein Frequenzvergleich zwischen ihrer Überlagerungsfrequenz und der von der stationären Station empfangenen Frequenz ausgelöst, um letztere für die daraufhin erfolgende Phasenmessung auf den vorgegebenen Frequenzversatz nachzuführen.

Die Aufgabe wird erfindungsgemäß durch das Verfahren gemäß Anspruch 1 und durch das System gemäß Anspruch 5 gelöst. Bei dem Gegenstand nach Anspruch 5 sind für den bidirektionalen Funkverkehr beim Datensammler dessen Empfänger und dessen Sender jeder mit einem Oszillator ausgestattet; während bei jedem Messgerät aus Aufwandsgründen nur ein gemeinsamer Oszillator für dessen Transceiver vorgesehen ist. Vorteilhafte Ausgestaltungen des Verfahrens und des Systems sind in den abhängigen Ansprüchen beansprucht.

Aus einer gewöhnlich quarz-stabilisierten, Oszillatorfrequenz wird die, vor dem Aussenden einer Amplituden-, Phasen- oder Frequenz-Modulation, insbesondere einer binären Modulation, zu unterwerfende Mitten- oder Referenzfrequenz abgeleitet. Empfangsseitig wird zum Demodulieren der modulierten Telegramme diese Referenzfrequenz ebenfalls generiert. Aber auch quarzstabilisierte Oszillatorfrequenzen sind nicht langzeitkonstant, sie driften insbesondere in Abhängigkeit von der Betriebsdauer und von der Betriebstemperatur des jeweiligen Quarzes, und auch aufgrund anderer Einflüsse auf die Schaltung. Optimaler Empfangsgewinn stellt sich jedoch nur ein, wenn Sender und Empfänger mit übereinstimmender Referenzfrequenz arbeiten; zumindest muss im Empfänger die Referenzfrequenz des Senders noch erkannt werden können. Bei zu starker Abweichung liegen die modulierten Empfangsfrequenzen so stark außermittig, oder gar außerhalb der Durchlasskurven von Empfangsfiltern, dass schließlich keine Telegramme mehr demoduliert werden können.

Bei den breitbandigen Uplink-Funkverbindungen vom jeweiligen Messgerät zum gemeinsamen Datensammler ist eine derartige Frequenzdrift in der Praxis insofern unkritisch, als für den Empfang beim Datensammler, wie schon erwähnt, erhebliche Ressourcen verfügbar sind, also fast beliebig viel Aufwand an Antennen- und an Filterauslegung getrieben werden kann, um trotz ausgewanderter Referenzfrequenz doch noch demodulierbare Datentelegramme rekonstruieren zu können.

Kritisch sind die dagegen wie erwähnt sehr eingeschränkten Ressourcen beim jeweiligen Messgerät für den Empfang von Steuertelegrammen über seinen Transceiver. Bei einem Mittenfrequenzversatz zwischen Datensammler-Sender und Messgerät-Empfänger ist Letzterer rasch nicht mehr in der Lage, verwertbare Steuertelegramme für die aktuelle Smartmeter-Funktion, also für die Konfiguration des so genannten intelligenten Messgerätes zur Verbrauchsbeeinflussung, zu demodulieren.

Als Abhilfe dagegen werden erfindungsgemäß beim Datensammler Frequenzdifferenz-Messungen vorgenommen; und gemäß deren Ergebnissen wird dessen aus der Quarzoszillator-Schaltung abgeleitete Sende-Referenzfrequenz verstimmt, bis für die schmalbandige Downlink-Verbindung vom Datensammler zum entsprechenden Messgerät aktuell hinreichende Mittenfrequenzübereinstimung gegeben ist.

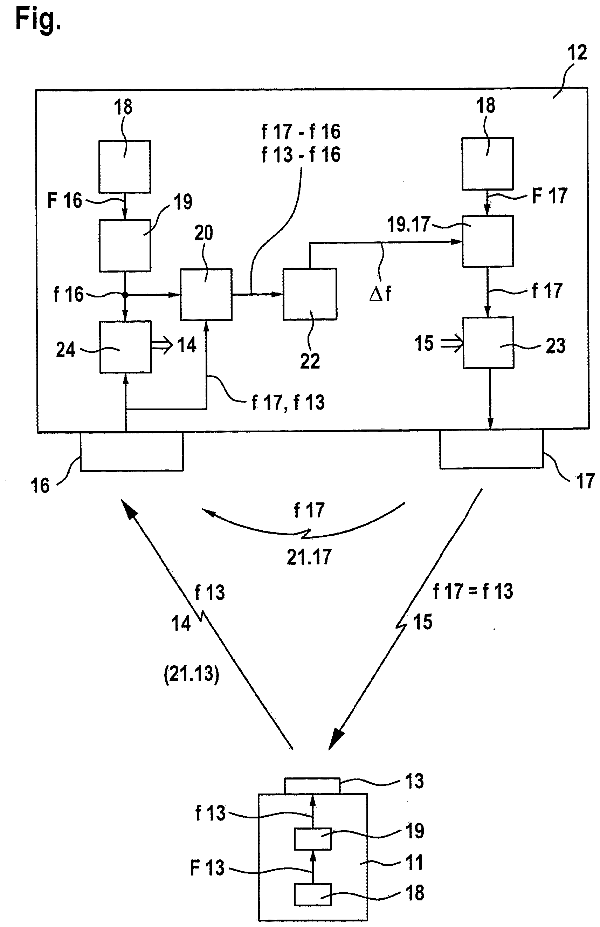

Diese erfindungsgemäße Lösung und deren apparative Verwirklichung werden nachstehend anhand der blockschaltmäßig auf das Funktionswesentliche vereinfachten Prinzipskizze eines bevorzugten Realisierungsbeispieles gemäß der einzigen Figur der Zeichnung näher erläutert. Daraus, und aus den abhängigen Ansprüchen, ergeben sich auch Weiterbildungen der erfindungsgemäßen Lösung.

Jedes zahlreicher auch als Smartmeter bezeichneter Messgeräte 11 (von denen hier nur eines dargestellt ist) kommuniziert bidirektional mit - wenigstens - einem ihnen gemeinsamen, auch als Konzentrator bezeichneten Datensammler 12. Jedes Messgerät 11 ist mit einem Transceiver 13 zu breitbandigem Senden von Datentelegrammen 14 (Uplink) und schmalbandigem Empfangen von Steuertelegrammen 15 (Downlink) ausgestattet. Der Datensammler 12 dagegen verfügt über getrennte Empfänger 16 und Sender 17.

Der Transceiver 13, der Empfänger 16 und der Sender 17 enthalten jeder einen Oszillator 18, insbesondere einen Quarzoszillator. Aus deren jeweiligen Oszillatorfrequenzen F wird, durch Frequenzteilungen oder -vervielfachungen in nachgeschalteten Konditionierern 19, die sendeseitig zu kodierende Mitten- oder Trägerfrequenz, hier als Referenzfrequenz f bezeichnet, für einen Modulator 23 abgeleitet. Im Rahmen vorliegender Erfindung kann der Modulator 23 gleichermaßen etwa für Frequenz-, für Phasen- oder auch für Amplitudenmodulation ausgelegt sein. Außerdem muss die Telegramm-Kodierung nicht unbedingt binär (z.B. 2FSK) sein, auch andere Kodierungen, wie 4FSK, sind vorteilhaft einsetzbar. Der entsprechend ausgelegte, empfangsseitige Demodulator 24 arbeitet auf derselben erwähnten Referenzfrequenz f mit darauf abgestimmten Filtern (nicht dargestellt).

Infolge von Alterungs- und Temperatureinflüssen, insbesondere auf die Oszillatoren 18, driften jedoch die jeweils vorgegebenen Oszillatorfrequenzen F13, F16 und F17 ab, weshalb auch die vor Ort daraus abgeleiteten Träger- oder Referenzfrequenzen f13, f16 und f17 dann nicht mehr übereinstimmen. Im Extremfall, wenn empfangsseitig nicht erkennbar ist, welche Referenzfrequenz f (f13 beziehungsweise f17) senderseitig moduliert wurde, ist gar keine empfangsseitige Demodulation mehr möglich. Die diesbezüglich optimalen Übertragungsverhältnisse liegen dagegen vor, wenn die Referenzfrequenzen f sende- und empfangsseitig identisch sind.

Um trotz des Driftens der Referenzfrequenzen f bei jedem Messgerät 11 mit geringstmöglichem schaltungstechnischem Aufwand möglichst gute Demodulationsverhältnisse für dort empfangene Steuertelegramme 15 zu erzielen, ist der Empfänger 16 des Datensammlers 12 mit wenigstens einem Vergleicher 20 für eine von einem Messgerät 11 aktuell empfangene Referenzfrequenz f13 und für seine eigene aktuelle, tatsächliche Referenzfrequenz f16 ausgestattet. Was hier zum Vereinfachen der Erläuterung blockschaltmäßig seriell erläutert wird, ist in der schaltungstechnischen Praxis ein gewöhnlich per Software implementierter Frequenzmesser, der gleichzeitig oder nacheinander die gesuchten Frequenzwerte sowie die Frequenzdifferenzen ermittelt und abspeichert beziehungsweise ausgibt.

Der Frequenz-Vergleicher 20 ist dem Demodulator 24 gewissermaßen parallel geschaltet; indem er wie skizziert einerseits an den Eingang für die empfängerseitige Referenzfrequenz f16 und andererseits an den Eingang für empfangene Referenzfrequenzen f13 beziehungsweise f17 angeschlossen ist. Beim Datensammler 12 wird nämlich vom Sender 17 an den Empfänger 16 ein Kalibriertelegramm 21.17 übermittelt, um empfangsseitig durch den Vergleicher 20 die empfangene momentane sendeseitige Referenzfrequenz f17 als solche in Hinblick auf die aktuell empfangsseitig generierte Referenzfrequenz f16, nämlich die Frequenzdifferenz f17 - f16 zu ermitteln. Außerdem nimmt der Empfänger 16 des Datensammlers 12 ein gerade vom Transceiver 13 einlaufendes Datentelegramm 14, oder ein ersatzweise ausgelöstes Kalibriertelegramm 21.13, mit dessen aktueller Referenzfrequenz f13 auf; und im Vergleicher 20 wird daraus die Frequenzdifferenz f13 - f16 ermittelt. Diese beiden Frequenzdifferenzen ihrerseits sind auf einen Subtrahierer 22 geschaltet, der deren Differenz (f17 - f16) - (f13 - f16) als Frequenzdifferenz f17 - f13 = Δf liefet; in welche die Empfänger-Referenzfrequenz f16 folglich nicht mehr eingeht. Um diese Differenzfrequenz Δf, eingespeist beispielsweise in den Konditionierer 19.17 des Senders 17, wird die a priori für den Downlink gebildete Referenzfrequenz f17 verschoben; so dass nun die Referenzfrequenzen f17 = f13 für den Modulator 23 im Sender 17 und für den empfangsseitigen Demodulator beim Transceiver 13 übereinstimmen.

Aus dieser Übereinstimmung von Modulations- und Demodulations-Referenzfrequenz f resultieren, wie oben ausgeführt, optimale Verhältnisse für die Demodulation des vom Messgerät 11 downlink empfangenen Steuertelegrammes 15, ohne dafür das Messgerät 11 mit seinem Transceiver 13 durch zusätzlichen schaltungstechnischen Aufwand zum Ermitteln und gegebenenfalls Korrigieren der momentanen transceiverseitigen Referenzfrequenz f13 belasten zu müssen. Vielmehr erfolgt die Downlink-Frequenzkorrektur im Datensammler 12; und das nicht aufgrund einer internen Frequenzmessung, sondern mittels eines realen, zwischen Sender 17 und Empfänger 16 ausgetauschten, deshalb alle funktechnischen Gegebenheiten mit erfassenden (Kalibrier-)Telegrammes 21.

Um bei einem Messgerät 11 mit Transceiver 13 für bidirektionalen, beispielsweise binärfrequenzmodulierten, Datenaustausch also trotz dessen minimaler Ressourcen einen optimalen Empfang der von einem Konzentrator, einem Datensammler 12 gesendeten Smartmeter-Steuertelegramme 15 zu erzielen, wird die aktuelle driftbehaftete Modulations-Referenzfrequenz f17 beim Datensammler 12 erfindungsgemäß um die momentane Frequenzdifferenz Δf aus aktueller senderseitiger Referenzfrequenz f17 und aktueller transceiverseitiger Referenzfrequenz f13 verschoben. Dadurch stimmen beim Downlink-Empfang die aktuellen Referenzfrequenzen f17 = f13 überein, ohne dafür in das Messgerät 11 eingegriffen haben zu müssen. Diese Frequenzdifferenz Δf beim Datensammler 12 wird aus einem Vergleich der aktuellen empfängerseitigen Demodulations-Referenzfrequenz f16 mit einerseits der aktuellen senderseitigen Referenzfrequenz f17 und andererseits der aktuellen transceiverseitigen Referenzfrequenz f13 aus Telegrammen 14, 21 vom Sender 17 des Datensammlers 12 und vom Transceiver 13 des Messgerätes 11 gewonnen, die mit dem Empfänger 16 des Datensammlers 12 aufgenommen werden. Ohne Beanspruchung der Ressourcen des Messgerätes 11 braucht für diesen Sende-Empfangs-Frequenzabgleich lediglich beim Datensammler 12 ein frequenzmessender Vergleicher 20 vor und hinter dem Demodulator 24 angeschlossen zu werden, gefolgt von einem auf den senderseitigen Konditionierer 19.17, zum Ableiten der Referenzfrequenz f aus einer quarzstabilisierten Oszillatorfrequenz F, geschalteten Differenzfrequenz-Subtrahierer 22.

### Bezugszeichenliste

- 11: Messgerät
- 12: Datensammler
- 13: Transceiver
- 14: Datentelegramm
- 15: (Steuer-)Telegramm
- 16: Empfänger
- 17: Sender
- 18: Oszillator; F = Oszillatorfrequenz
- 19: Konditionierer; f = Referenzfrequenz; Δf = Frequenzdifferenz f17 - f13
- 20: Vergleicher
- 21: Kalibriertelegramm
- 22: Subtrahierer
- 23: Modulator
- 24: Demodulator

## Patentansprüche

1. Verfahren zur bidirektionaler Kommunikation zwischen einerseits Datensammler (12) mit Sender (17) und Empfänger (16) und andererseits Messgeräten (11) mit Transceivern (13) mittels einer modulierten Referenzfrequenz (f), wobei Transceiver (13), Empfänger (16) und Sender (17) mit Oszillatoren (18) driftbehafteter Oszillatorfrequenzen (F) versehen sind, aus denen die zu modulierende beziehungsweise zu demodulierende Referenzfrequenz (f ) abgeleitet ist, **dadurch gekennzeichnet, dass**, zum schmalbandigen Übertragen von Telegrammen (15) vom Datensammler (12) an ein Messgerät (11), beim Datensammler (12) Frequenzdifferenzmessungen durchgeführt werden und gemäß deren Ergebnisse die aktuelle senderseitige Referenzfrequenz (f17) um die momentane Frequenzdifferenz (Δf) zwischen aktueller senderseitiger Referenzfrequenz (f17) und aktueller transceiverseitiger Referenzfrequenz (f13) verschoben wird, bis für die schmalbandige Downlink-Verbindung vom Datensammler (12) zum Messgerät (11) eine hinreichende Mittenfrequenzübereinstimmung gegeben ist.

2. Verfahren nach Anspruch 1, **dadurch gekennzeichnet, dass** beim Datensammler (12) die empfängerseitige Referenzfrequenz (f16) sowohl mit der senderseitigen Referenzfrequenz (f17) wie auch mit der transceiverseitigen Referenzfrequenz (f13) verglichen und aus den Unterschieden die Frequenzdifferenz (Δf) gebildet wird.

3. Verfahren nach dem vorangehenden Anspruch, **dadurch gekennzeichnet, dass** beim Empfänger (16) des Datensammlers (12) die senderseitige Referenzfrequenz (f17) in einem vom Sender (17) dieses Datensammlers (12) abgestrahlten Kalibriertelegramm (21.17) und die transceiverseitige Referenzfrequenz (f13) in einem vom Messgerät (11) abgestrahlten Datentelegramm (14) gemessen wird.

4. Verfahren nach dem vorvorangehenden Anspruch, **dadurch gekennzeichnet, dass** beim Empfänger (16) des Datensammlers (12) die senderseitige Referenzfrequenz (f17) in einem vom Sender (17) dieses Datensammlers (12) abgestrahlten Kalibriertelegramm (21.17) und die transceiverseitige Referenzfrequenz (f13) in einem vom Messgerät (11) abgestrahlten Kalibriertelegramm (21.13) gemessen wird.

5. System , ausgelegt zum Ausüben des Verfahrens gemäß wenigstens einem der vorangehenden Verfahrensansprüche, mit einem Datensammler (12) mit Sender (17) und Empfänger (16) für bidirektionalen Austausch von modulierten Telegrammen (15, 14) sowie mit wenigstens einem Messgerät (11) mit Transceiver (13), wobei der Datensammler (12) je einen Oszillator (18) zum Ableiten einer driftbehafteten Referenzfrequenz (f17) für den Sender (17) sowie einer driftbehafteten Referenzfrequenz (f16) für den Empfänger (16) des Datensammlers (12) und das Messgerät (11) einen Oszillator (18) zum Ableiten einer driftbehafteten Referenzfrequenz (f13) für den Transceiver (13) umfassen, wobei die Telegramme (15) vom Datensammler (12) an ein Messgerät (11) schmalbandig übertragbar sind, **gekennzeichnet durch** wenigstens einen Vergleicher (20) beim Datensammler (12), der von der aktuellen empfängerseitigen Referenzfrequenz (f16), sowie einerseits von der aktuell vom Sender (17) des Datensammlers (12) gesendeten und vom Empfänger (16) des Datensammlers (12) empfangenen senderseitigen Referenzfrequenz (f17) und andererseits von der aktuell empfangenen transceiverseitigen Referenzfrequenz (f13) beaufschlagt ist, mit einem dem Vergleicher (20) nachgeschalteten Subtrahierer (22) zum feststellen der Frequenzdifferenz (Δf) zwischen den beiden Frequenzunterschieden (f17-f16, bzw. f13-f16) zwischen der Referenzfrequenz (f17) des Senders (17) und der Referenzfrequenz (f16) des Empfängers (16) sowie der Referenzfrequenz (f13) des Transceivers (13) und der Referenzfrequenz (f16) des Empfängers (16), wobei der Datensammler angepasst ist, zur Verschiebung der senderseitige Referenzfrequenz (f17) um die Frequenzdifferenz (Δf) auf die transceiverseitige Referenzfrequenz (f13), bis für die schmalbandige Downlink-Verbindung vom Datensammler (12) zum Messgerät (11) eine hinreichende Mittenfrequenzübereinstimmung gegeben ist.

6. System nach dem vorangehenden Anspruch, **dadurch gekennzeichnet, dass** den Oszillatoren (18) Konditionierer (19) für das Ableiten der Referenzfrequenzen (f) aus den Oszillatorfrequenzen (F) nachgeschaltet sind und dass der Subtrahierer (22) auf den senderseitigen Konditionierer (19.17) geschaltet ist.

7. System nach einem der beiden vorangehenden Ansprüche, **dadurch gekennzeichnet, dass** der frequenzmessende Vergleicher (20) an die Eingänge des Demodulators (24) für die empfängerseitige Referenzfrequenz (f16) beziehungsweise für die zu demodulierende transceiverseitige Referenzfrequenz (f13) angeschlossen ist.

8. System nach einem der drei vorangehenden Ansprüche, **dadurch gekennzeichnet, dass** die Oszillatoren (18) quarzstabilisiert sind.

## Claims

1. Method for bidirectional communication between a data collector (12) having a transmitter (17) and a receiver (16), on the one hand, and meters (11) having transceivers (13), on the other hand, by means of a modulated reference frequency (f), wherein the transceiver (13), receiver (16) and transmitter (17) are provided with oscillators (18) having oscillator frequencies (F) which are subject to drift and from which the reference frequency (f) to be modulated or demodulated is derived, **characterized in that**, for the narrowband transmission of messages (15) from the data collector (12) to a meter (11), frequency difference measurements are carried out in the data collector (12) and, according to their results, the current transmitter-side reference frequency (f17) is shifted by the instantaneous frequency difference (Δf) between the current transmitter-side reference frequency (f17) and the current transceiver-side reference frequency (f13) until there is sufficient centre frequency correspondence for the narrowband downlink connection from the data collector (12) to the meter (11).

2. Method according to Claim 1, **characterized in that** the receiver-side reference frequency (f16) is compared both with the transmitter-side reference frequency (f17) and with the transceiver-side reference frequency (f13) in the data collector (12) and the frequency difference (Δf) is formed from the differences.

3. Method according to the preceding claim, **characterized in that** the transmitter-side reference frequency (f17) in a calibration message (21.17) emitted by the transmitter (17) of the data collector (12) and the transceiver-side reference frequency (f13) in a data message (14) emitted by the meter (11) are measured in the receiver (16) of said data collector (12).

4. Method according to the preceding claim, **characterized in that** the transmitter-side reference frequency (f17) in a calibration message (21.17) emitted by the transmitter (17) of the data collector (12) and the transceiver-side reference frequency (f13) in a calibration message (21.13) emitted by the meter (11) are measured in the receiver (16) of said data collector (12).

5. System designed to carry out the method according to at least one of the preceding method claims, having a data collector (12) with a transmitter (17) and a receiver (16) for the bidirectional interchange of modulated messages (15, 14) and having at least one meter (11) with a transceiver (13), wherein the data collector (12) comprises one oscillator (18) each for deriving a reference frequency (f17) which is subject to drift for the transmitter (17) and a reference frequency (f16) which is subject to drift for the receiver (16) of the data collector (12), and the meter (11) comprises an oscillator (18) for deriving a reference frequency (f13) which is subject to drift for the transceiver (13), wherein the messages (15) can be transmitted from the data collector (12) to a meter (11) in the narrowband, **characterized by** at least one comparator (20) in the data collector (12), to which the current receiver-side reference frequency (f16) and, on the one hand, the transmitter-side reference frequency (f17) currently transmitted by the transmitter (17) of the data collector (12) and received by the receiver (16) of the data collector (12) and, on the other hand, the currently received transceiver-side reference frequency (f13) are applied, having a subtractor (22), which is connected downstream of the comparator (20), for determining the frequency difference (Δf) between the two frequency differences (f17-f16 and f13-f16) between the reference frequency (f17) of the transmitter (17) and the reference frequency (f16) of the receiver (16) and between the reference frequency (f13) of the transceiver (13) and the reference frequency (f16) of the receiver (16), wherein the data collector is adapted to shift the transmitter-side reference frequency (f17) by the frequency difference (Δf) to the transceiver-side reference frequency (f13) until there is sufficient centre frequency correspondence for the narrowband downlink connection from the data collector (12) to the meter (11).

6. System according to the preceding claim, **characterized in that** conditioners (19) for deriving the reference frequencies (f) from the oscillator frequencies (F) are connected downstream of the oscillators (18), and **in that** the subtractor (22) is connected to the transmitter-side conditioner (19.17).

7. System according to one of the two preceding claims, **characterized in that** the frequency-measuring comparator (20) is connected to the inputs of the demodulator (24) for the receiver-side reference frequency (f16) and for the transceiver-side reference frequency (f13) to be demodulated.

8. System according to one of the three preceding claims, **characterized in that** the oscillators (18) are crystal-stabilized.

## Revendications

1. Procédé de communication bidirectionnelle entre, d'une part, des collecteurs de données (12) comprenant des émetteurs (17) et des récepteurs (16) et, d'autre part, des appareils de mesure (11) comprenant des émetteurs-récepteurs (13) au moyen d'une fréquence de référence (f) modulée, les émetteurs-récepteurs (13), les récepteurs (16) et les émetteurs (17) étant pourvus d'oscillateurs (18) à fréquences d'oscillateur (F) soumises à une dérive, à partir desquelles est dérivée la fréquence de référence (f) à moduler ou à démoduler, **caractérisé en ce que**, pour la transmission à bande étroite de télégrammes (15) du collecteur de données (12) à un appareil de mesure (11), des mesures de différence de fréquence sont effectuées au niveau du collecteur de données (12) et, conformément à leurs résultats, la fréquence de référence actuelle côté émetteur (f17) est décalée de la différence de fréquence momentanée (Δf) entre la fréquence de référence actuelle côté émetteur (f17) et la fréquence de référence actuelle côté émetteur-récepteur (f13), jusqu'à ce qu'une concordance de fréquence centrale suffisante soit obtenue pour la liaison descendante à bande étroite du collecteur de données (12) vers l'appareil de mesure (11).

2. Procédé selon la revendication 1, **caractérisé en ce qu'**au niveau du collecteur de données (12), la fréquence de référence côté récepteur (f16) est comparée aussi bien à la fréquence de référence côté émetteur (f17) qu'à la fréquence de référence côté émetteur-récepteur (f13) et la différence de fréquence (Δf) est formée à partir des différences.

3. Procédé selon la revendication précédente, **caractérisé en ce qu'**au niveau du récepteur (16) du collecteur de données (12), la fréquence de référence côté émetteur (f17) est mesurée dans un télégramme de calibrage (21.17) rayonné par l'émetteur (17) de ce collecteur de données (12) et la fréquence de référence côté émetteur-récepteur (f13) dans un télégramme de données (14) rayonné par l'appareil de mesure (11).

4. Procédé selon la revendication précédente, **caractérisé en ce qu'**au niveau du récepteur (16) du collecteur de données (12), la fréquence de référence côté émetteur (f17) est mesurée dans un télégramme de calibrage (21.17) rayonné par l'émetteur (17) de ce collecteur de données (12) et la fréquence de référence côté émetteur-récepteur (f13) dans un télégramme de calibrage (21.13) rayonné par l'appareil de mesure (11).

5. Système conçu pour mettre en œuvre le procédé selon au moins l'une des revendications précédentes, comprenant un collecteur de données (12) avec un émetteur (17) et un récepteur (16) pour un échange bidirectionnel de télégrammes modulés (15, 14) ainsi qu'au moins un appareil de mesure (11) avec un émetteur-récepteur (13), le collecteur de données (12) comprenant respectivement un oscillateur (18) destiné à dériver une fréquence de référence (f17) soumise à une dérive pour l'émetteur (17) ainsi qu'une fréquence de référence (f16) soumise à une dérive pour le récepteur (16) du collecteur de données (12) et l'appareil de mesure (11) comprenant un oscillateur (18) destiné à dériver une fréquence de référence (f13) soumise à une dérive pour l'émetteur-récepteur (13), les télégrammes (15) pouvant être transmis à bande étroite du collecteur de données (12) à un appareil de mesure (11), **caractérisé par** au moins un comparateur (20) au niveau du collecteur de données (12), qui est alimenté par la fréquence de référence actuelle côté récepteur (f16), ainsi que, d'une part, par la fréquence de référence côté émetteur (f17) actuellement émise par l'émetteur (17) du collecteur de données (12) et reçue par le récepteur (16) du collecteur de données (12) et, d'autre part, par la fréquence de référence côté émetteur-récepteur (f13) actuellement reçue, comprenant un soustracteur (22) monté en aval du comparateur (20) pour identifier la différence de fréquence (Δf) entre les deux différences de fréquence (f17-f16 ou f13-f16) entre la fréquence de référence (f17) de l'émetteur (17) et la fréquence de référence (f16) du récepteur (16) ainsi que la fréquence de référence (f13) de l'émetteur-récepteur (13) et la fréquence de référence (f16) du récepteur (16), le collecteur de données étant adapté pour décaler la fréquence de référence côté émetteur (f17) de la différence de fréquence (Δf) sur la fréquence de référence côté émetteur-récepteur (f13), jusqu'à ce qu'une concordance de fréquence centrale suffisante soit donnée pour la liaison descendante à bande étroite du collecteur de données (12) vers l'appareil de mesure (11).

6. Système selon la revendication précédente, **caractérisé en ce que** des conditionneurs (19) sont montés en aval des oscillateurs (18) pour la dérivation des fréquences de référence (f) à partir des fréquences d'oscillateur (F) et **en ce que** le soustracteur (22) est monté sur le conditionneur côté émetteur (19.17).

7. Système selon l'une des deux revendications précédentes, **caractérisé en ce que** le comparateur (20) de mesure de fréquence est raccordé aux entrées du démodulateur (24) pour la fréquence de référence côté récepteur (f16) ou pour la fréquence de référence côté émetteur-récepteur (f13) à démoduler.

8. Système selon l'une des trois revendications précédentes, **caractérisé en ce que** les oscillateurs (18) sont stabilisés par quartz.
